# EUROPÄISCHE PATENTSCHRIFT

(11) **EP 0 442 337 B1**
(45) Veröffentlichungstag und Bekanntmachung des Hinweises auf die Patenterteilung: **07.04.1993**
(21) Anmeldenummer: 91101416.5
(22) Anmeldetag: 02.02.1991
(51) Int. Cl.: C02F 3/30

(54) **Verfahren zur biologischen Reinigung von Abwässern**
Process for biological purification of waste water
Procédé pour la purification biologique d'eaux usées

(30) Priorität: 14.02.1990 DE 4004476
(43) Veröffentlichungstag der Anmeldung: 21.08.1991
(73) Patentinhaber: SCHERING AKTIENGESELLSCHAFT, 13353 Berlin (DE)
(72) Erfinder: Stein, Theodor, W-4708 Kamen (DE)

(56) Entgegenhaltungen:
- DE-A- 3 543 408
- "Lehr- und Handbuch der Abwassertechnik" 1985, Abwassertechnische Vereinigung e.V., Berlin
- PATENT ABSTRACTS OF JAPAN vol. 012, no. 181 (C-499)(3028) 27 Mai 1988.
- PATENT ABSTRACTS OF JAPAN vol. 5, no. 49 (C-49)(721) 8 April 1981.
- CHEMICAL ABSTRACTS, vol. 112, no. 8, 19 Februar 1990 Columbus, Ohio, USA Fukagawa, Masayuki et al.: "A study on biological treatment with control of redox potential" Seite 382; linke Spalte; ref. no. 62023Z

## Beschreibung

Die Erfindung betrifft ein kontinuierliches Verfahren, mit dem Abwässer mit niedrigen bis hohen Konzentrationen an organischen Inhaltsstoffen und Gesamt-Stickstoff (Definition gemäß Deutschem Einheitsverfahren zur Wasser, Abwasser- und Schlammuntersuchung H 12) biologisch so gereinigt werden, daß die genannten organischen Inhaltsstoffe minimiert werden, der genannte Gehalt an Gesamt-Stickstoff vollständig nitrifiziert wird, soweit er den Assimilationsbedarf übersteigt, und das gebildete Nitrat reduziert wird.

Dabei wird der Aufwand für den Sauerstoffeintrag, der Aufwand für die Denitrifikation und der Anfall von Überschußschlamm minimiert.

Es ist bekannt, daß man bei der Abwasserbehandlung in einer vorgeschalteten Denitrifikationsstufe durch Rückführung von Belebtschlamm aus dem Absetzbecken der Belebungsanlage und/oder durch Rückführung eines Abwasserstroms aus dem Nitrifikationsbecken wesentliche Teile des Sauerstoffs, der zur Oxidation der Stickstoff-Verbindungen dient, zurückgewinnen kann [1] [2] [3] [4].

Es ist weiter bekannt, daß die der 1. Stufe zulaufende Fracht an organischen Inhaltsstoffen durch diese Denitrifikation gemindert wird und daß zu einer Nitrifikation eine niedrige BSB₅-Schlammbelastung erforderlich ist [1].

Es ist weiter bekannt, daß eine vollständige Denitrifikation des der 1. Stufe zugeführten Wassers nur möglich ist, wenn das Verhältnis CSB-Zulauf/NO₃--Stickstoff-Rückführung entsprechend der Stöchiometrie bei 4 kg/kg oder höher liegt [2]. Besonders bei industriellen Abwässern ist aber das Verhältnis von organischer Fracht und Gesamt-Stickstoff häufig großen Schwankungen unterworfen. Übersteigt bei diesen Schwankungen das Verhältnis CSB-Zulauf/NO₃--Stickstoff-Rückführung den oben genannten Betrag von 4 kg/kg, muß der überschüssige CSB in der Nitrifikationsstufe abgebaut werden.

Es wurde nun überraschend gefunden, daß es möglich ist, durch eine gezielte Belüftung der ersten (Denitrifikations-)Stufe sowohl eine vollständige Denitrifikation als auch einen weitgehenden biologischen Abbau der überschüssigen organischen Inhaltsstoffe zu erreichen.

Die Erfindung betrifft demnach ein Verfahren zur biologischen Reinigung von Abwässern mit niedrigen bis hohen Konzentrationen an organischen Inhaltsstoffen und Gesamt-Stickstoff , bei dem das zu reinigende Abwasser in einer ersten denitrifizierenden Stufe und einer zweiten belüfteten oder mit Sauerstoff beaufschlagten Stufe behandelt wird, wobei ein Teilstrom des aus der zweiten Stufe ablaufenden Abwasser-Belebtschlamm-Gemischs in die erste Stufe zurückgeführt wird und das aus dem zweiten Bioreaktor ablaufende Abwasser-Belebtschlamm-Gemisch in einem Absetzbehälter getrennt, der abgesetzte Belebtschlamm der ersten Stufe zugeführt wird und das gereinigte Abwasser abgeführt wird, welches dadurch gekennzeichnet ist, daß die erste Stufe belüftet oder mit Sauerstoff beaufschlagt wird, wobei ein vorgewähltes Redoxpotential nicht überschritten wird.

Bevorzugt wird die Belüftung bzw. Sauerstoffversorgung in der ersten Stufe über das Redoxpotential geregelt.

Dabei wird bevorzugt ein Redoxpotential Eₕ (pH7) unter + 100 mV, vorzugsweise im Bereich von 0 bis 50 mV, eingehalten.

Bevorzugt wird bei der Belüftung oder Beaufschlagung mit Sauerstoff der zweiten Stufe ein vorgegebener Wertebereich für den Sauerstoffgehalt, insbesondere der Bereich von 0,5 bis 10 mg/l, vorzugsweise 2 bis 4 mg/l, eingehalten.

Es ist vorteilhaft, die Belüftung bzw. Sauerstoffversorgung in der zweiten Stufe über den gemessenen Sauerstoffgehalt zu regeln.

Eine Denitrifizierung in Gegenwart von Luftsauerstoff wird nach bisheriger Meinung ausgeschlossen [1] [3] [4]. In anderen Veröffentlichungen wird auf eine mögliche Denitrifzierung unter Zufuhr von Luft hingewiesen [5] [6], doch werden keine definierten Bedingungen für eine Prozeßführung angegeben. Überdies wird vor einer Akkumulation von Nitrit gewarnt [6] [7] [8].

Überraschend wurde gefunden, daß eine Denitrifikation in einem industriell anwendbaren Abbauverfahren bei gleichzeitiger Begasung mit Luft bzw. Sauerstoff unter bestimmten Bedingungen möglich ist, ohne daß eine schädliche Akkumulation von Nitrit vorkommt.

Das erfindungsgemäße Verfahren bietet zusammengefaßt folgende Vorteile:
1. Neben der Minderung der organischen Fracht durch die Denitrifikation der Stickstoffverbindungen wird ein so großer Teil der organischen Fracht durch eingetragenen Sauerstoff oxidiert, daß die organische Belastung der zweiten Stufe minimiert wird.
2. Der Sauerstoffübergang in der ersten Stufe ist bei einem vorgewählten niedrigen Redoxpotential erheblich höher als bei einer voll-aeroben Belüftung. In Abhängigkeit von der Höhe der Wassersäule kann die Sauerstoffausnutzung bis zu 90 % betragen. Dadurch werden wesentliche Teile der organischen Inhaltsstoffe mit niedrigeren Belüftungskosten als beim üblichen Verfahren oxidiert. Die Auslegung der Belüftung in der zweiten Stufe ist damit in der Hauptsache abhängig vom Sauerstoffbedarf für die Nitrifikation.
3. Das Volumen des Nitrifikationsbeckens (erste Stufe) kann minimiert werden; es ist auszulegen vor allem nach den Daten der zu erwartenden Belastung der Biomasse mit dem zu oxidierenden Gesamt-Stickstoff.
4. Die Bildung von Überschußschlamm ist niedrig (sie liegt unter 0,2 kg TS/kg CSB abgebaut), da die Schlammbelastung im Nitrifikationsbecken (zweite Stufe) niedrig ist.

Darüber hinaus ist das Verfahren ebenfalls anwendbar und effektiv bei Abwässern, die so geringe Gehalte an Stickstoffverbindungen aufweisen, daß der physiologische Bedarf der Bakterien durch Zusatz von Stickstoffverbindungen gedeckt werden muß.

Die Betriebsweise und die im einzelnen errreichten Vorteile des erfindungsgemäßen Verfahrens werden im folgenden näher erläutert.

Der ersten Stufe (Bioreaktor 1, ausgerüstet mit einer Einrichtung zur Durchmischung, einer Belüftungseinrichtung und einer Einrichtung zur Messung des Redoxpotentials) wird das zu reinigende Abwasser, das Abwasser-Belebtschlamm-Gemisch aus der zweiten Stufe ( Bioreaktor 2) und der abgesetzte Belebtschlamm aus dem Absetzbehälter zugeführt und alle Anteile gut durchgemischt. Dabei werden durch die Organismen des Belebtschlamms die organischen Inhaltsstoffe des Abwassers aufgenommen und mit dem Sauerstoff des Nitrats umgesetzt zu Kohlendioxid und Wasserstoff. Das sich einstellende Redoxpotential ist abhängig von dem Verhältnis Nitrat-Sauerstoff aus dem rückgeführten Abwasser-Belebt-schlamm-Gemisch der 2. Stufe zum CSB-Gehalt (chemischer Sauerstoffbedarf als Ausdruck für die Konzentration der organischen Inhaltsstoffe) im Zulaufwasser. Übersteigt die Zufuhr an CSB das Angebot an Nitrat-Sauerstoff, sinkt das Redox-Potential unter den vorgegebenen Wert. In der bevorzugten Ausführungsform des erfindungsgemäßen Verfahrens mit Regelung des Sauerstoffeintrags über das Redoxpotential setzt dann die Zufuhr von Luft und/oder Sauerstoff ein. Die nach der Oxidation durch Denitrifikation verbliebenen Anteile an organischer Fracht werden nunmehr von den Organismen des Belebtschlamms mit Hilfe von freiem Sauerstoff oxidiert. Dabei steigt das Redox-Potential an bis zur Erreichung des vorgegebenen Wertes für das Redox-Potential und führt damit wieder zu einer Minderung der Luft/Sauerstoffzufuhr.

Der einzuhaltende Redoxpotential-Wert sollte unterhalb einem Eₕ (pH) von +100 mV, vorzugsweise im Bereich von 0 bis 50 mV liegen.

Das Redoxpotential wird vorteilhaft gemessen mit einer Messkette, bestehend aus einer Platin-Elektrode und einer Bezugs-Elektrode (z. B. Kalomel-Elektrode oder Silber/Silberchlorid-Elektrode).

Damit wird erreicht, daß
a) wesentliche Teile des für die Oxidation des Amin-Ammon-Stickstoffes verbrauchten Sauerstoffes zurückgewonnen werden,
b) durch Reduktion des Säure-Äquivalents des Nitrats wesentliche Mengen an Neutralisationsmitteln gespart werden,
c) durch biologische Oxidation der überwiegende Teil der organischen Fracht des Abwassers bereits im Bioreaktor 1 beseitigt wird und somit
d) dem nachgeschalteten Bioreaktor 2 nur noch geringe Mengen an organischer Fracht zulaufen und diese Stufe im wesentlichen der Nitrifikation dient, auch dann, wenn das CSB-Angebot im Zulauf zum Gesamtsystem den Bedarf des Nitratsauerstoffes aus der Rückführung vom Bioreaktor 2 zum Bioreaktor 1 wesentlich übersteigt.
e) der CSB-Wert um rund 80 % gemindert wird.

Im Bioreaktor 2 wird der einlaufende Gesamt-Stickstoff zum Nitrat oxidiert und der restliche Gehalt an CSB weiter gemindert.

Der Bioreaktor 2 ist ausgerüstet mit einer Belüftungseinrichtung, einer Einrichtung zur Messung des Sauerstoffgehaltes in der wässrigen Phase, einer Einrichtung zur Messung des pH-Wertes und einer Einrichtung zur Dosierung von Neutralisationsmitteln.

Im Bioreaktor 2 wird der einlaufende Gesamt-Stickstoff zum Nitrat oxidiert und die restliche Konzentration an CSB weiter gemindert. Um eine vollständige Nitrifizierung zu erreichen, ist es erforderlich, daß ein Mindestgehalt an Sauerstoff im Abwasser gelöst ist, der bei den Versuchen bei 3 mg O₂/l lag. Unterhalb dieser Konzentration war die Nitrifikation nicht immer vollständig.

Die Mengenströme sind zu regeln in Abhängigkeit von der Konzentration der Abwasserinhaltsstoffe, so daß im Bioreaktor 1 eine Raumbelastung an organischen Inhaltsstoffen ausgedrückt als CSB einen Wert von 15 kg CSB/m³.d nicht wesentlich überschreitet, bevorzugt aber in einem Bereich von 10 kg CSB/m³.d, um Schwankungen in der Abwasserkonzentration sicher zu beherrschen. (Falls keine vollständige oder zum mindesten weitgehende Nitrifikation gewünscht wird, kann, in Abhängigkeit von den Gegebenheiten des Abwassers, die CSB-Raumbelastung des Bioreaktors 1 höher angesetzt werden.) Eine obere Grenze der Stickstoff-Raumbelastung im Bioreaktor 2 wurde bisher nicht festgestellt. Raumbelastungen von bis zu 0,4 kg Gesamt-Stickstoff/m³.d wurden vollständig nitrifiziert.

Die Rückführung des Belebtschlamm-Wassergemisches vom Bioreaktor 2 zum Bioreaktor 1 kann in einem weiten Bereich variieren. Er wird zweckmäßigerweise berechnet und so gewählt, daß ein Optimum der Betriebskosten erreicht wird, das abhängig ist von der aufzubringenden Pumpenergie einerseits und von den Kosten für Neutralisierungsmittel und den Kosten für die Reduktionsmittel im Bioreaktor 3 andererseits.

Zusätzlich kann in einer dritten Stufe (Bioreaktor 3), falls erforderlich, der Anteil an Nitrat, der die Möglichkeit der Denitrifikation im Bioreaktor 1 übersteigt, durch Zusatz biologisch oxidierbarer Substanz (z. B. Methanol) in Abhängigkeit vom vorgegebenen Redox-Potential reduziert werden, so daß bei Über- bzw. Unterschreitung des vorgegebenen Wertes Redox-Potential die Zufuhrmenge der genannten Substanz gemindert bzw. gesteigert wird.

Hierzu wird der Bioreaktor 3 ausgerüstet mit einer Einrichtung zur Durchmischung, einer Einrichtung zur Messung des Redoxpotentials und einer Einrichtung zur Dosierung von biologisch oxidierbarem Material für den Zweck der Denitrifizierung. Dieser Reaktor sollte gegen Luftzutritt gesichert sein.

Damit wird erreicht, daß
a) das gereinigte Abwasser frei ist von Nitrat und/oder Nitrit
b) Probleme im Absetzbecken durch Denitrifikationsvorgänge vermieden werden, die zur teilweisen Flotation des abgesetzten Belebtschlammes durch die gebildeten Stickstoffblasen führen können.

Im nachfolgenden Absetzbecken wird das Belebtschlamm-Abwasser-Gemisch in bekannter Weise getrennt. Das gereinigte Abwasser fließt ab, der abgesetzte Belebtschlamm wird zum Bioreaktor 1 zurückgeführt.

Der Anteil des zurückgeführten Schlamms wird in bekannter Weise berechnet in Abhängigkeit von der zugeführten Abwassermenge (Rücklauf-Schlamm-Verhältnis) und vom Absetzverhalten.

Besonders gute Ergebnisse lassen sich erreichen, wenn das Abwasser gemäß EP 0 038 017 partiell aerob vorbehandelt wird. Dabei werden die Abwasserinhaltsstoffe mit Hilfe disperser, nicht geflockter Bakterien unter Einsatz einer über das Redoxpotential geregelten minimalen Belüftung um ca. 60 % oxidativ gemindert. Ein Teil der Abwasserinhaltsstoffe wird in disperse Bakterien umgewandelt. Dieser Teil verläßt das System zusammen mit dem behandelten Abwasser.

Wird nun dieses so vorbehandelte Abwasser dem erfindungsgemäßen Verfahren unterworfen, werden sowohl die dispersen Bakterien als auch die gelösten organischen Reststoffe so weit minimiert, daß Wirkungsgrade für den CSB-Abbau >80 % und für den BSB₅-Abbau >90 % erreicht werden, bezogen auf das erfindungsgemäße Verfahren.

Bezogen auf den Gesamtprozeß (partiell aerobe Vorbehandlung plus erfindungsgemäßes Verfahren) können die Wirkungsgrade des CSB-Abbaus auf >90 % und die des BSB₅-Abbaus auf >95 % gesteigert werden.

Mit einem synthetischen Abwasser wurde festgestellt, daß bis zu einer CSB-Raumbelastung im Bioreaktor 1 von 17,5 g CSB/l·d die Nitrifikation im Bioreaktor 2 stets vollständig war. Der pH-Wert lag zwischen 7,5 und 8,3, die Temperatur bei 25 °C. Dabei konnte die hydraulische Retentionszeit im Bioreaktor 1 bis zu einer Stunde gesenkt werden. Die Gesamt-Stickstoff-Belastung des Bioreaktors 2 konnte bis zu 310 mg N/l·d gesteigert werden, ohne daß die Nitrifikation eingeschränkt war. Wurde die genannte Grenze der CSB-Raumbelastung des Bioreaktors 1 von 17,5 g CSB/l·d überschritten, war eine vollständige Nitrifizierung nicht mehr gegeben. Offensichtlich wurde sie durch eine höhere Zufuhr von organischen Inhaltsstoffen zum Bioreaktor 2 negativ beeinflußt.

Mit anderen Abwässern wurden niedrigere Grenzen der CSB-Raumbelastung in der 1. Stufe als Begrenzung der vollständigen Nitrifikation gefunden.

Es ist daher anzunehmen, daß für jeden Anwendungsfall des erfindungsgemäßen Verfahrens die Bedingungen der vollständigen Nitrifikation neu ermittelt werden müssen.

Dagegen war bei Verzicht auf vollständige Nitrifikation und Beschränkung auf die CSB-Minderung mit CSB-Raumbelastungen bis zu 30 g CSB/l·d im Bioreaktor 1 eine wesentlich höhere Belastung des Systems möglich; dabei lag die CSB-Minderung des Gesamtsystems bei >90 %.

Dabei wurde gefunden, daß bei den im Verfahren angestrebten niedrigen Redox-Potentialen im Bioreaktor 1 bestimmte organische Verbindungen biologisch nicht angreifbar sind. Zu diesen Verbindungen gehören aromatische Verbindungen (z. B. Toluol, Tetrahydrofuran) und chlorierte Kohlenwasserstoffe (z. B. Ethylenchlorid, Dichlormethan).

Es wurde weiterhin gefunden, daß bei den angestrebten niedrigen Redox-Potentialen im Bioreaktor 1 bestimmte Metaboliten entstehen, die in einem voll-aeroben Prozess nicht auftreten. Zu diesen Verbindungen zählen Ethen (C₂H₄) und Kohlenmonoxid (CO). Es ist weiterhin aus der Literatur bekannt, daß die Reaktionskette des Nitrats abläuft über die Stufen NO₃- --> NO₂ --> N₂O --> N₂.

Es ist von diesen Verbindungen (Aromaten, Chlorkohlenwasserstoffe, Ethen, CO, N₂O) zu erwarten, daß sie in meßbaren Konzentrationen im Abgas des Bioreaktors 1 vorhanden sind.

Man wird also vorteilhaft das Abgas des Bioreaktors 1 dem Bioreaktor 2 zuleiten, so daß diese Inhaltsstoffe in der Wasserphase des Bioreaktors 2 gelöst, von der Biomasse adsorbiert und auf biologischem Wege oxidiert werden, um die Emissionen des Verfahrens zu minimieren. Das wird erreicht, indem das Abgas des Bioreaktors 1 entweder der Begasungsluft des Bioreaktors 2 beigemischt oder in einer gesonderten Begasungseinrichtung in die Wasserphase des Bioreaktors 2 eingetragen wird.

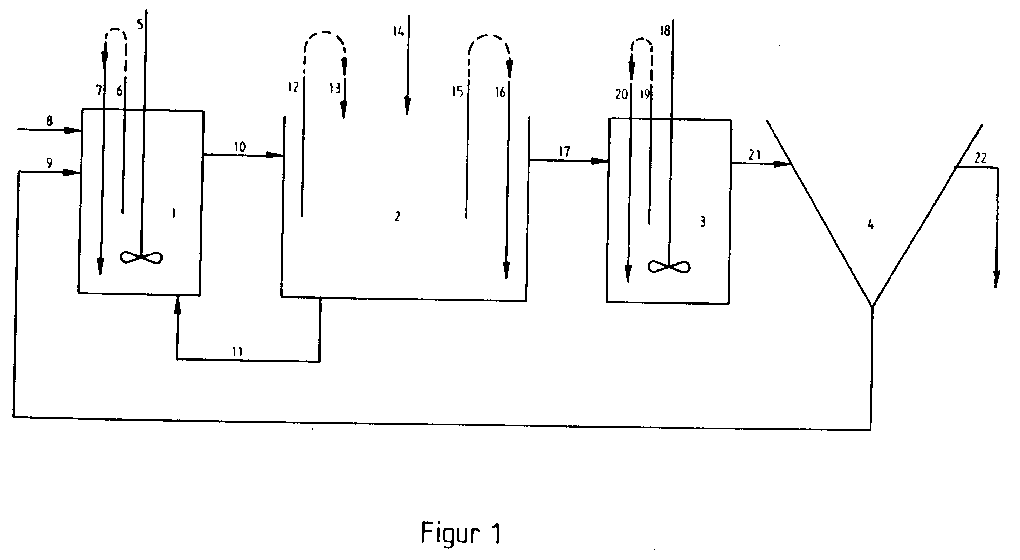

### Beispiel (vgl. Figur 1)

Ein Abwasser der chemisch-pharmazeutischen Industrie, partiell vorbehandelt nach EP 0 038 017 (vgl. Seite 9), wird einer Apparatur zugeleitet, bestehend aus Bioreaktor 1 (1) mit 10 1 Volumen, ausgerüstet mit einem Rührer (5), einer Redox-Elektrode (6) und einer Belüftungseinrichtung (7).

Diesem Bioreaktor 1 (1) wird ein Abwasserstrom (8) zugeleitet in Mengen von 48 l/d mit einer CSB-Konzentration von 1000 mg/l bis 2500 mg/l, einer BSB₅-Konzentration von 400 bis 700 mg/l und einem Gehalt an Gesamt-Stickstoff von 120 mg/l bis 200 mg/l.

Weiterhin wird dem Bioreaktor 1 (1) zugeleitet ein Rückführungsstrom (11) an Abwasser-Belebtschlamm-Gemisch von 30 l/d sowie ein Gemisch aus abgesetztem Belebtschlamm und Abwasser (9) aus dem Absetzbehälter (4) in einer Menge von 10 l/d.

Diesem Bioreaktor 1 (1) wird Luft in Abhängigkeit vom Redoxpotential so zugeleitet, daß ein Potential von Eₕ (pH7) = +20mV ±10 mV eingehalten wird (Messung mit einer Elektrode (Fa. Ingold Pt 4805-60).

Das Abwasser-Belebtschlamm-Gemisch (1) läuft dann dem Bioreaktor 2 (2) zu, der ein Volumen von 36,8 l aufweist. Dieser ist ausgerüstet mit einer pH-Elektrode (12), einer Dosiereinrichtung für Neutralisationsmittel (13), einer Sauerstoffelektrode (15), einer Belüftungseinrichtung (16).

Dem Bioreaktor 2 wird Luft in Abhängigkeit vom gemessenen Sauerstoffgehalt so zugeführt, daß eine Konzentration von 3 mg O₂/l nicht unterschritten wird.

Dem Bioreaktor 2 wird Neutralisationsmittel in Abhängigkeit vom gemessenen pH-Wert so zugeführt, daß ein pH-Wert von - 8.0 nicht wesentlich unter- oder überschritten wird.

Das Abwasser-Belebtschlamm-Gemisch von Bioreaktor 2 (17) wird dem Bioreaktor 3 (3) zugeführt, der ein Volumen von 5 l aufweist. Dieser ist ausgerüstet mit einem Rührer (18), einer Redox-Elektrode (19) und einer Zugabeeinrichtung für Methanol (20).

Die Zuführung des Methanols erfolgt in Abhängigkeit vom Redoxpotential, so daß ein Potential von Eₕ (pH7) = +60mV nicht überschritten und ein Potential von Eₕ (pH7) = +40mV nicht unterschritten wird.

Das Abwasser-Belebtschlamm-Gemisch von Reaktor 3 (21) läuft dann einem Absetzbecken (4) zu, das ein Volumen von 33 l hat. Hier trennt sich der Belebtschlamm vom Abwasser und wird - wie oben beschrieben - als Strom (9) dem Bioreaktor 1 (1) zugeführt.

Das im Absetzbehälter (4) vom Belebtschlamm getrennte, gereinigte Abwasser läuft ab (22).

Die Abwasserströme werden untersucht wie folgt:
Das Zulaufwasser (8) auf CSB, BSB₅, Gesamt-Stickstoff und Phosphatgehalt.

Das Abwasser-Belebtschlamm-Gemisch (10) von Reaktor 1 (1) nach Reaktor 2 (2) auf den CSB der abgesetzten Probe und auf den Gehalt an Nitrit NO₂-.

Das Abwasser des Zulaufstroms (17) zu Bioreaktor 3 auf Nitrit NO₂- und Nitrat NO₃-.

Das Ablaufwasser des Gesamtsystems (22) auf CSB, BSB₅, Ammonium-Ion NH₄⁺, Nitrat NO₃- und Nitrit NO₂-.

Der Belebtschlammgehalt des Gemisches in Reaktor 2 (2), in gTS (Trockensubstanz)/l, das Absetzvolumen in ml/l werden bestimmt und das mikroskopische Bild des Belebtschlamms werden untersucht. Der gefundene Gehalt an Trockensubstanz liegt zwischen 9 und 15 g/l mit einem Glührückstand zwischen 40 und 45 %.

Das Abwasser verläßt den Bioreaktor 1 (1) mit CSB-Werten zwischen 230 und 470 mg/l. Der Wert Nitrit NO₂- liegt stets unter 0,05 mg/l (Nachweisgrenze).

Das aus dem Bioreaktor 2 ablaufende Abwasser hat einen Nitratgehalt zwischen 30 mg/l und 215 mg/l.

Das aus dem Gesamtsystem ablaufende Abwasser hat einen CSB-Wert zwischen 170 und 330 mg/l, einen BSB₅-Wert zwischen <5 und 100 mg/l, der Nitrit- und Nitratgehalt sowie der Ammoniumgehalt liegen unter der Nachweisgrenze (<2 mg NH₄-N/l).

Damit wird ein CSB-Abbau von mehr als 80 %, ein BSB₅-Abbau von mehr als 90 %, eine Nitrifikation von mehr als 99 % und eine Denitrifikation >99 % nachgewiesen.

Die Produktion an Überschuß-Schlamm liegt unter 0,1 g/g CSB abgebaut.

### Literatur

[1] ATV "Lehr- und Handbuch der Abwassertechnik"
   3. Aufl. Bd. IV (1985) Verlag Ernst & Sohn (S. 307 - 317)
[2] A. Esener et al. "Pretreatment scheme eases waste water biotreatment" Oil and Gas Journal (1987) (S. 40 - 43)
[3] H. G. Schlegel "Allgemeine Mikrobiologie"
   6. Aufl. G. Thieme Verlag, Stuttgart. New York (1985) (S. 302 - 306)
[4] Yasushi K. et al. "Inhibition of Denitrification by Oxygen in Paracoccus denitrificans"
   J. Ferment. Technol. Vol 63 No 5 (1985) (S. 437 - 442)
[5] S. Christensen, J. Tiedge "Oxygen control prevents denitrifiers and barly plant roots from Directly competing for nitrate"
   FEMS microbiol. Ecology 53 (1988) (S. 217 - 221)
[6] J. Meiberg et al. "Effect of Dissolved Oxygen Tension on the Metabolism of Methylated Amines in Hypomicrobium X in the Absence and Presence of Nitrate: Evidence for Aerobic Denitrification"
   J. General Microbiol. Vol. 120 (1980)
   (S. 453 - 463)
[7] M. Samuelsson et al. "Heat Production by the Denitrifying Bacterium Psendomonas fluorescens and the Dissimilatory Ammonium-Producing Bacterium Pseudomonas putrefaciens during Anaerobic Growth with Nitrate as Electron Acceptor" Appl. Environm. Microbiol. Vol 54 (1988), (S. 2220 - 2225)
[8] D. Hernandes, J. Rowe "Oxygen Regulation of Nitrate Uptake in Denitrifying Pseudomonas aeruginosa". Appl. Environm. Microbiol. Vol 53 (1987) (S. 745 - 750)

### Erläuterungen zu Figur 1:

1. Bioreaktor 1 (1. Stufe)
2. Bioreaktor 2 (2. Stufe)
3. Bioreaktor 3 (3. Stufe)
4. Absetzbehälter
5. Rührer 1. Stufe
6. Redox-Elektrode 1. Stufe
7. Luftzufuhr 1. Stufe (geregelt durch 6.)
8. Zulauf Rohabwasser
9. Rückführung abgesetzter Belebtschlamm
10. Zulauf zur 2. Stufe
11. Rückführung von der 2. zur 1. Stufe
12. pH-Elektrode 2. Stufe
13. Neutralisationsmittelzugabe (geregelt durch 12.)
14. Zufuhr von Nährsalzen (nur bei Bedarf)
15. Sauerstoffelektrode 2. Stufe
16. Luftzufuhr 2. Stufe (geregelt durch 15.)
17. Zulauf zur 3. Stufe
18. Rührer 3. Stufe
19. Redox-Elektrode 3. Stufe
20. Zugabe von organischem Material (z. B. Methanol) zum Zwecke der Denitrifizierung geregelt in Abhängigkeit von 12.
21. Zulauf zum Absetzbehälter
22. Ablauf gereinigtes Abwasser

## Patentansprüche

1. Verfahren zur biologischen Reinigung von Abwässern mit niedrigen bis hohen Konzentrationen an organischen Inhaltsstoffen und Gesamt-Stickstoff, bei dem das zu reinigende Abwasser in einer ersten denitrifizierenden Stufe und einer zweiten belüfteten oder mit Sauerstoff beaufschlagten Stufe behandelt wird, wobei ein Teilstrom des aus der zweiten Stufe ablaufenden Abwasser-Belebtschlammgemischs in die erste Stufe zurückgeführt wird und das aus der zweiten Stufe ablaufende Abwasser-Belebtschlamm-Gemisch in einem Absetzbehälter getrennt, der abgesetzte Belebtschlamm der ersten Stufe zugeführt wird und das gereinigte Abwasser abgeführt wird, dadurch gekennzeichnet, daß die erste Stufe belüftet oder mit Sauerstoff beaufschlagt wird, wobei ein vorgewähltes Redoxpotential nicht überschritten wird.

2. Verfahren gemäß Anspruch 1, dadurch gekennzeichnet, daß die Belüftung bzw. Sauerstoffversorgung in der ersten Stufe über das Redoxpotential geregelt wird.

3. Verfahren gemäß Anspruch 1 oder 2, dadurch gekennzeichnet, daß ein Redoxpotential Eₕ (pH7) unter + 100 mV, vorzugsweise im Bereich von 0 bis 50 mV, eingehalten wird.

4. Verfahren gemäß einem oder mehreren der Ansprüche 1 - 3, dadurch gekennzeichnet, daß bei der Belüftung oder Beaufschlagung mit Sauerstoff der zweiten Stufe ein vorgegebener Wertebereich für den Sauerstoffgehalt eingehalten wird.

5. Verfahren gemäß Anspruch 4, dadurch gekennzeichnet, daß ein Sauerstoffgehalt in einem Bereich von 0,5 bis 10 mg/l, vorzugsweise 2 bis 4 mg/l, eingehalten wird.

6. Verfahren gemäß Anspruch 4 oder 5, dadurch gekennzeichnet, daß die Belüftung bzw. Sauerstoffversorgung in der zweiten Stufe über den gemessenen Sauerstoffgehalt geregelt wird.

## Claims

1. Process for biologically purifying waste waters containing low to high concentrations of organic constituents and total nitrogen, in which the waste water to be purified is treated in a first denitrifying stage and in a second stage that is aerated or exposed to oxygen, a partial flow of the waste water/activated sludge mixture draining from the second stage being fed back to the first stage, and the waste water/activated sludge mixture draining from the second stage being separated in a settling tank, the settled activated sludge being fed to the first stage and the purified waste water being removed, characterised in that the first stage is aerated or exposed to oxygen, during which a preselected redox potential is not exceeded.

2. Process according to claim 1, characterised in that the aeration or oxygen supply in the first stage is regulated by means of the redox potential.

3. Process according to claim 1 or 2, characterised in that a redox potential Eₕ (pH 7) of below +100 mv, preferably in the range from 0 to 50 mv, is maintained.

4. Process according to one or more of claims 1 - 3, characterised in that during the aeration or exposure to oxygen of the second stage, the oxygen content is maintained in a specific range of values.

5. Process according to claim 4, characterised in that an oxygen content in the range from 0.5 to 10 mg/l, preferably 2 to 4 mg/l, is maintained.

6. Process according to claim 4 or 5, characterised in that the aeration or oxygen supply in the second stage is regulated by means of the measured oxygen content.

## Revendications

1. Procédé pour l'épuration biologique des eaux résiduaires ayant des concentrations faibles à élevées de constituants organique et d'azote total, dans lequel les eaux résiduaires à épurer sont traitées dans un premier étage de dénitrification et dans un deuxième étage, aéré ou recevant de l'oxygène, un courant partiel du mélange d'eaux résiduaires et de boues activées provenant du deuxième étage étant renvoyé dans le premier étage, le mélange des eaux résiduaires et des boues activées sortant du deuxième bioréacteur étant séparé dans un bassin de décantation, les boues activées déposées étant envoyées au premier étage, et les eaux résiduaires épurées étant évacuées, caractérisé en ce que le premier étage est aéré ou reçoit un apport d'oxygène,en ne dépassant pas un potentiel rédox présélectionné.

2. Procédé selon la revendication 1, caractérisé en ce que l'aération ou l'apport d'oxygène dans le premier étage est régulé par l'intermédiaire du potentiel rédox.

3. Procédé selon la revendication 1 ou 2, caractérisé en ce qu'on maintient un potentiel rédox Eₕ (pH 7) inférieur à +100 mV et de préférence compris entre 0 et 50 mV.

4. Procédé selon l'une ou plusieurs des revendications 1 à 3, caractérisé en ce que, lors de l'aération ou de l'apport d'oxygène au deuxième étage, on maintient pour la teneur en oxygène un intervalle prédéfini.

5. Procédé selon la revendication 4, caractérisé en ce qu'on maintient la teneur en oxygène entre 0,5 et 10 et de préférence entre 2 et 4 mg/l.

6. Procédé selon la revendication 4 ou 5, caractérisé en ce que l'aération ou l'apport d'oxygène au deuxième étage est régulé par l'intermédiaire de la teneur mesurée en oxygène.
